# FASCICULE DE BREVET EUROPEEN

(11) **EP 3 631 332 B1**
(45) Date de publication et mention de la délivrance du brevet: **24.02.2021**
(21) Numéro de dépôt: 18735641.5
(22) Date de dépôt: 22.05.2018
(51) Int. Cl.: F27B 19/04, F27D 17/00, C03B 5/235, F27B 1/04, F27B 9/10, F27D 99/00

(54) **FOUR COMBINÉ**
KOMBINATIONSOFEN
COMBINED FURNACE

(30) Priorité: 23.05.2017 FR 1754579
(43) Date de publication de la demande: 08.04.2020
(73) Titulaire: Arc France, 62510 Arques (FR)
(72) Inventeur: CHARLES, Herv, 62510 Arques (FR); BONNINGUES, Jean-Marie, 62510 Arques (FR); DONZE, Sébastien, 62510 Arques (FR); FAMCHON, François, 62510 Arques (FR); IBLED, Xavier, 62510 Arques (FR)
(74) Mandataire: Cabinet Netter
(86) Numéro de dépôt international: PCT/FR2018/051217
(87) Numéro de publication internationale: WO 2018/215721

(56) Documents cités:
- EP-A1- 0 132 654
- US-A- 5 057 133
- DATABASE WPI Week 198309 20 janvier 1983 (1983-01-20) Thomson Scientific, London, GB; AN 1983-20839K XP002777842, -& JP S58 9829 A (ASAHI GLASS CO LTD) 20 janvier 1983 (1983-01-20)

## Description

L'invention concerne le domaine de l'industrie verrière. La fusion des matériaux constitutifs du verre nécessite l'apport d'une grande quantité d'énergie. La température du bain de verre est de l'ordre de 1300 à 1500°C. Selon sa composition, le verre est destiné à un usage ménager direct, par exemple les bouteilles, verres à boire, le vitrage, ou indirect, par exemple les plaques vitrocéramiques, ou industriel.

Le four est soumis à des contraintes thermiques et mécaniques très élevées. Le four est construit avec des revêtements réfractaires de haute qualité. Ces revêtements réfractaires sont onéreux et sensibles à certains constituants du verre susceptibles de réaction chimique. Les revêtements réfractaires étant de mauvais conducteurs de chaleur, le chauffage du bain de verre est effectué par le dessus.

On dispose un ou plusieurs brûleur(s) à flamme à combustible liquide ou gazeux entre le bain de verre et le sommet du four appelé voûte. Le bain de verre est chauffé par radiation pour l'essentiel. La température de sortie des gaz est de 1300 à 1600 °C selon la famille de verre.

Par ailleurs, la fabrication de verre dégage de grandes quantités de gaz. Le bain de verre est dégazé pendant plusieurs heures pour éviter la formation de bulles dans le verre. Pour faciliter le dégazage, des additifs d'affinage tels que des sulfates peuvent être utilisés. Le four fonctionne par lots de verre de composition choisie.

Les gaz de sortie, issus du dégazage et issus de la combustion, sont évacués par une cheminée.

L'énergie contenue dans les gaz de sortie d'un four de verrerie a fait l'objet de tentatives de récupération. Le carburant, fioul ou méthane, peut être préchauffé par les gaz de sortie mais seulement à des températures inférieures à 550°C. Au-delà, il se produit une décomposition en hydrogène et carbone. L'hydrogène est difficile à manipuler en sécurité. Le carbone se dépose sur les parois des conduits sous forme de goudrons. Le gain énergétique est faible, inférieur à 50% de la chaleur latente des gaz de sortie.

Une autre proposition est de faire passer les gaz de sortie dans un premier récupérateur de chaleur stockant l'énergie thermique et l'air comburant dans un deuxième récupérateur de chaleur ayant stocké l'énergie thermique des gaz de sortie. Une alternance est commandée par un ensemble de vannes. Ce système nécessitant des investissements conséquents offre un bon rendement d'environ 65%. La température des gaz en sortie du récupérateur est de l'ordre de 400°C.

JPS589829 A fait référence à un four verrier à combustion située au-dessus d'une cuve et un conduit d'évacuation des fumées en communication avec la chambre de chauffe. Les fumées sont utilisés pour le pré-chauffage de débris de verre.

La Demanderesse a poursuivi l'objectif d'une réduction majeure de la consommation d'énergie rapportée à la masse de verre produite.

La Demanderesse propose un four combiné à verre et à pierre. On entend par « four à pierre» un four de cuisson de pierre, telle que calcaire, dolomie, silex, alumine hydratée, susceptible de fournir en sortie de cuisson une matière première, notamment entrant dans la composition du verre.

Dans un verre sodo-calcique, les matériaux initiaux principaux sont du calcaire, de la soude par exemple sous forme de carbonate de sodium Na₂CO₃ et de la silice sous forme de sable de quartz. Le calcaire et le carbonate de sodium libèrent du CO₂ lors de l'élaboration du verre.

A priori le bilan économique lié à l'utilisation de matières premières pré-élaborées (chaux vive, chaux magnésienne, etc.) est moins favorable que celui de matières premières conventionnelles malgré un tonnage transporté et manipulé réduit.

La Demanderesse propose une installation comprenant un four verrier industriel comprenant une cuve à verre fondu, une chambre de chauffe à combustion située au-dessus de la cuve, et un conduit d'évacuation des fumées en communication avec la chambre de chauffe; et un four à pierre comprenant une zone de cuisson de pierre à cuire, le conduit d'évacuation des fumées comprend une sortie de fumées reliée à la zone de cuisson de pierre à cuire alimentant la zone de cuisson de pierre à cuire en fumées à haute température.

Le four à pierre fonctionne en croisement de flux. La pierre à cuire est chargée dans le haut du four à pierre et descend en se transformant sous l'effet de la chaleur. En bas du four à pierre est récupérée la chaux, la magnésie, la silice fragmentée, l'alumine déshydratée, etc. Les gaz chauds sont introduits dans le four à pierre. L'énergie thermique des gaz chauds est transférée à la pierre en cours de cuisson. La température de sortie des gaz peut être faible. Une excellente récupération d'énergie est effectuée, par récupération de l'énergie fatale.

Aux températures prévues dans le four à pierre :
- Le calcaire se transforme en chaux par calcination avec libération de CO₂.
- La dolomie se transforme en une combinaison d'oxyde de magnésium et d'oxyde de calcium par calcination avec libération de CO₂.
- Le silex comprend en général environ 90% de silice, et environ 10% de composés de Mg, Ca, Al et/ou Na. Ces espèces interviennent dans la fabrication du verre. Le silex porté à haute température devient friable et se fragmente. Au contraire, le silex non cuit présente une dureté élevée le rendant difficile à concasser. Or une granulométrie millimétrique est demandée pour une fusion plus rapide. Du silex de rivière, de mer ou de carrière peut être utilisé en cuisson.
- L'alumine hydratée se déshydrate à haute température.

Par ailleurs, une partie des gaz de sortie peut être envoyée dans le four à pierre et le reste dans un récupérateur alternatif en tandem. La production de chaux peut être adaptée à la demande.

Un autre avantage non prévu est apparu. Dans la présente installation, le chlore présent dans les fumées peut se déposer en surface des pierres à cuire et être recyclé dans le four verrier. Le chlore peut être présent associé à la chaux sous forme de chlorure de calcium et à la magnésie sous forme de chlorure de magnésium. Le chlore est un affinant qui favorise le dégazage du verre en fusion.

Le soufre est un meilleur affinant que le chlore. Le soufre présent dans les fumées peut se déposer en surface des pierres à cuire et être recyclé dans le four verrier. Le soufre peut être présent sous forme de sulfate de calcium, de sulfate de magnésium ou de sulfate de sodium. Le recyclage du soufre en sulfate associé à la pierre cuite permet de réduire d'environ 50% l'approvisionnement du four verrier en sulfate, notamment en sulfate de calcium. En outre, le traitement des fumées avant leur relâchement dans l'atmosphère est rendu plus simple, voire inutile.

L'installation permet un recyclage grâce à ses propriétés (i) auto neutralisantes des espèces acides présentes dans les fumées et (ii) auto nettoyantes limitant les opérations de maintenance sur les conduits de fumées.

Ledit four à pierre ou un four à pierre supplémentaire peut également servir à la production d'oxydes de magnésium et de calcium. Ce mélange est alors produit par calcination de la dolomie. La mise en œuvre dudit mélange d'oxydes de magnésium et de calcium permet de réduire la freinte, à savoir notamment, le dégagement de CO₂.

Dans un mode de réalisation, ladite sortie de fumées est ménagée dans un carneau du conduit d'évacuation des fumées. On peut commander le débit de fumées dans ladite sortie de fumées.

Dans un mode de réalisation, le combustible est du gaz et/ou du fioul.

Dans un mode de réalisation, le comburant est de l'air.

Dans un mode de réalisation, le comburant est de l'oxygène. Le taux de NOₓ dans les fumées est réduit et la consommation d'énergie est diminuée.

Dans un mode de réalisation, la capacité du four verrier est supérieure à 10 tonnes de verre par jour. Le four est de type industriel.

Dans un mode de réalisation, l'installation comprend au moins deux fours verriers et un four à pierre. L'arrêt des fours verriers peut être décalé pour assurer une continuité de chauffe du four à pierre. L'installation peut également comprendre un récupérateur d'énergie des fumées dans le cas de l'air comburant.

Dans un mode de réalisation, l'installation comprend un four verrier, un four à pierre et un brûleur d'appoint apte à chauffer le four à pierre. Une production soutenue et constante par le four à pierre est obtenue.

Dans un mode de réalisation, la zone de cuisson est tubulaire, une zone d'alimentation en pierre à cuire étant disposée au-dessus et une zone de retrait de pierre cuite étant disposée en dessous. En four classique, la pierre cuite est refroidie par l'air comburant introduit par-dessous. Ici, une faible dépression est réglée dans la zone de retrait de pierre cuite afin d'éviter l'échappement de fumées par le bas. Un débit d'air montant est donc prévu. Dans le cas où les fumées sont à température trop élevée, par exemple pour le revêtement du four à pierre, une dépression plus élevée est réglée d'où une dilution des fumées dans la zone de cuisson et un abaissement de température.

Dans le cas contraire où l'on veut conserver la température de la zone de cuisson à une valeur élevée, une dérivation de l'air entré par la zone de retrait de pierre cuite et se trouvant dans le bas de la zone de cuisson est mise en place. La dérivation peut être dirigée vers l'entrée d'air du four verrier. La dérivation peut être dirigée vers une entrée d'un régénérateur permettant de limiter son refroidissement lors de son fonctionnement en alimentation du four verrier. La dérivation peut être dirigée vers une zone du four à pierre située au-dessus de la zone de cuisson.

L'invention propose un procédé de cuisson de pierre à cuire :
- de la pierre à cuire est introduite dans une zone de cuisson de pierre à cuire, et
- la zone de cuisson est alimentée en fumées issues de la combustion provenant d'un conduit d'évacuation des fumées monté en aval d'une chambre de chauffe à combustion d'un four verrier industriel comprenant une cuve à verre fondu et ledit conduit d'évacuation des fumées en communication avec la chambre de chauffe lors de la chauffe du four verrier.

Dans un mode de réalisation, la pierre à cuire est choisie parmi calcaire, dolomie, silex ou alumine hydratée. La cuisson du calcaire et de la dolomie est une calcination, c'est-à-dire une libération de CO₂ ou décarbonatation. La cuisson du silex est une fragmentation thermique. La cuisson de l'alumine hydratée est une dessiccation par élimination de l'eau liée.

Au cours de la montée en température de la pierre à cuire, il y a élimination de l'eau libre puis de l'eau liée, puis décomposition des carbonates en oxydes et CO₂. Dans un four à chaux à combustion au gaz naturel, le combustible est introduit dans une ou des zone(s) de combustion du four à chaux et l'air comburant est introduit partiellement par en bas dans la zone de retrait de la chaux et/ou dans la ou les zone(s) de combustion.

Ici, le four à pierre est à gaz chaud. Les gaz chauds sont introduits dans une zone située à environ 2/3 de la hauteur du four à pierre.

On peut prévoir un four à pierre de hauteur entre 20 et 30 m et de diamètre intérieur de 3 à 5 m, avec une zone de cuisson de 3 à 4 m de hauteur.

Dans un mode de réalisation, la température maximale au sein de la zone de cuisson de pierre à cuire est supérieure à 900°C, préférablement supérieure à 1000°C. La décarbonatation se produit rapidement.

Dans un mode de réalisation, la cuisson de la pierre à cuire abaisse la température des fumées jusqu'à moins de 300°C, préférablement moins de 200°C. Les fumées ressortent à 100°C ou légèrement plus par le gueulard du four à pierre. Les pertes énergétiques sont très faibles et la condensation de la vapeur d'eau provenant des fumées et de la dessiccation des pierres à cuire est évitée.

Dans un mode de réalisation, la température des fumées est abaissée de plus de 900°C, préférablement de plus de 1100°C, plus préférablement de plus de 1200°C. Les fumées peuvent entrer dans le four à pierre à plus de 1300°C, par exemple environ 1500°C. La puissance récupérée peut être comprise entre 10 et 30 kW dans un four, par tonne de production journalière de verre.

Dans un mode de réalisation, la pierre à cuire séjourne dans la zone de cuisson de pierre à cuire pendant une durée comprise entre 1 et 4 h et dans le four à pierre pendant 12 à 36 h.

Dans un mode de réalisation, la pierre à cuire est déplacée à contre-courant des gaz de combustion.

Dans un mode de réalisation, les fumées comprennent des composants chlorés et lesdits composants chlorés sont piégés sur la pierre à cuire dans le cas d'utilisation de dolomie et de calcaire. En sortie on obtient un mélange d'oxydes de magnésium et de calcium ou une chaux à teneur en chlorures compatible avec une utilisation verrière.

Dans un mode de réalisation, les fumées comprennent des composants soufrés, et lesdits composants soufrés sont piégés sur la pierre à cuire, notamment dans le cas d'utilisation de dolomie et de calcaire. En sortie du four à pierre, on obtient une pierre composée notamment d'oxydes de magnésium et de calcium ou de la chaux, à teneur en sulfates compatible avec une utilisation verrière.

Le four à pierre est ainsi auto-neutralisant et autonettoyant pour les fumées dont la teneur en S et Cl exige dans les conditions ordinaires un traitement spécifique. Un traitement de neutralisation des fumées est inutile.

Dans un mode de réalisation, le verre obtenu dans le four verrier industriel est sodo-calcique, borosilicate, aluminosilicate, de quartz ou vitrocéramique.

D'autres caractéristiques, détails et avantages de l'invention apparaitront à la lecture de la description détaillée ci-après, et des dessins annexés, sur lesquels :
- la figure 1 est une vue en coupe d'une installation combinée selon un aspect de l'invention ;
- la figure 2 est une vue en coupe d'une installation combinée selon un autre aspect de l'invention.
- la figure 3 montre une variante de la figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La Demanderesse a effectué des essais de calcination de pierre calcaire dans le carneau d'un four verrier industriel en fonctionnement. La masse des échantillons de pierre calcaire était de 396 à 633 grammes. La température en début de calcination était comprise entre 1240 et 1340°C. La température en fin de calcination était comprise entre 1290 et 1380°C. La réaction de calcination CaCO₃ → CaO + CO₂ entraîne une perte de masse théorique de 43%. Les durées de calcination inférieures à 1 heure produisent des pertes de masse trop faibles indicatrices d'une calcination incomplète. Une calcination d'une heure produit une perte de masse de 42,1%. Une calcination de 1,75 à 2,25 heures produit une perte de masse de 43,7 à 44% traduisant une calcination complète et une légère perte de matière à la récupération de l'échantillon. La perte est liée aux conditions de l'essai et peut être évitée dans un procédé de nature industrielle. Les fumées de sortie du four verrier permettent la calcination du calcaire. Les autres pierres à cuire peuvent comprendre la dolomie, le silex, l'alumine hydratée.

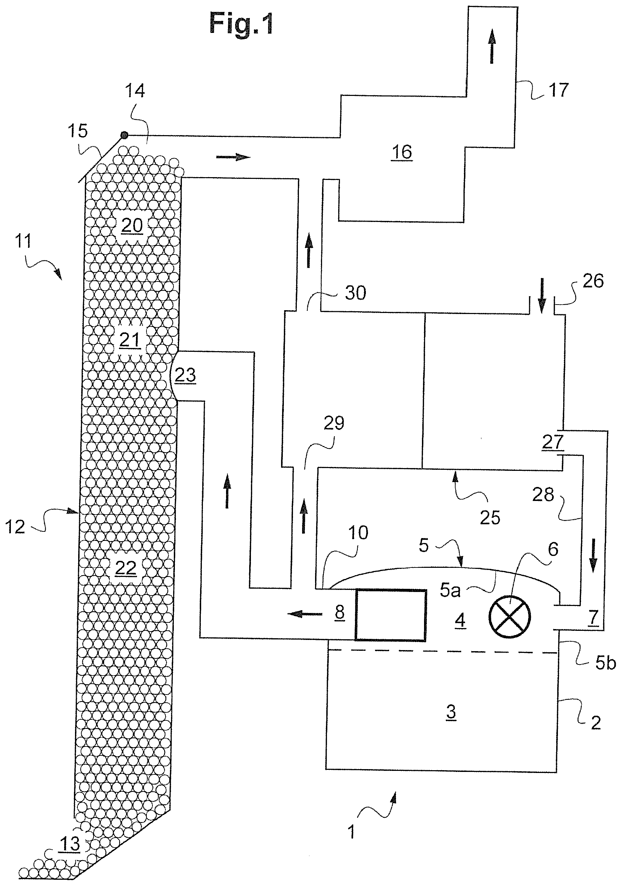

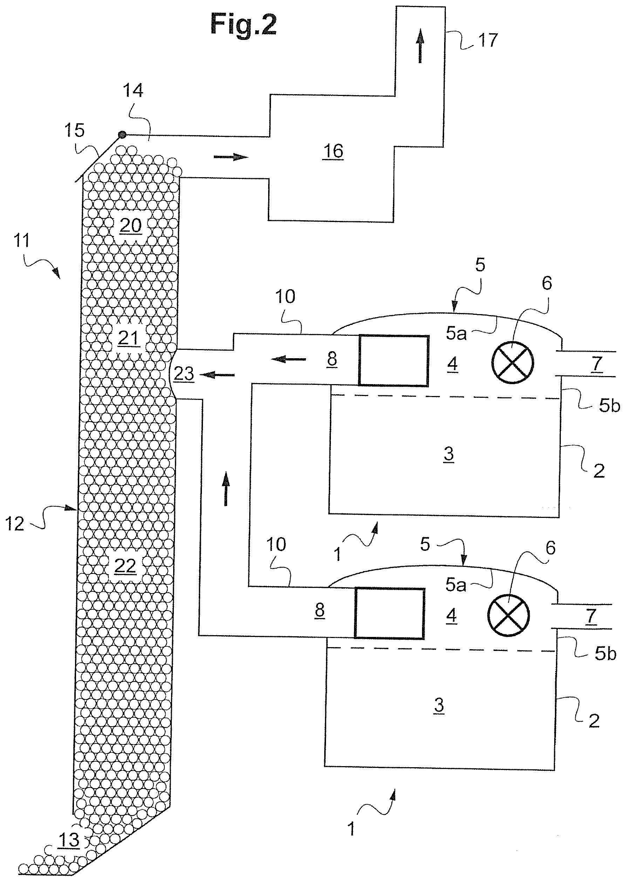

Le four verrier 1 comprend une cuve 2 à verre fondu 3 pour une production par lot. Le four verrier 1 comprend une chambre de combustion 4 située au dessus du bain de verre fondu 3 et une paroi supérieure 5 composée d'une voûte 5a et de parties verticales dites pieds droits (longueur) ou pignons (largeur) 5b délimitant la chambre de combustion 4. Le four verrier 1 comprend au moins un brûleur 6 alimenté en fioul ou gaz et une entrée de comburant 7. Le comburant peut être de l'air, cf figure 1, ou de l'oxygène, cf figure 2.

La cuve 2 et la paroi supérieure 5 sont réalisées en matériaux réfractaires, renforcés par une structure métallique extérieure distante des zones de haute température. Le brûleur 6 est à flamme orientée horizontalement dans la chambre de combustion 4. Le four verrier 1 comprend une sortie de fumées 8 ménagée dans un des parois verticales 5b au dessus du bain de verre fondu. Le brûleur 6 et la sortie de fumées 8 peuvent être prévus sur un même petit côté de manière que la flamme et les fumées effectuent un trajet en U dans la chambre de combustion 4. Le four verrier 1 peut être un four à boucle.

En aval du four verrier 1 dans le sens de déplacement des fumées, l'installation comprend un carneau 10. Le carneau 10 est un conduit de fumées sensiblement horizontal. Le carneau 10 est en communication de fluide avec la chambre de combustion 4 par la sortie de fumées 8. Le carneau 10 est réalisé en matériaux réfractaires renforcés par une structure métallique extérieure distante des zones de haute température. Le carneau 10 est pourvu d'un embranchement et possède deux sorties. Le carneau 10 est dépourvu de vanne.

En aval du four verrier 1 dans le sens de déplacement des fumées, l'installation comprend un four à pierre 11. Le four à pierre 11 peut être un four à chaux. Le four à pierre 11 présente une structure orientée verticalement. Le four à pierre 11 présente une forme de révolution. Le four à pierre 11 est réalisé en matériaux réfractaires renforcés par une structure métallique extérieure distante des zones de haute température. Le four à pierre 11 peut présenter une hauteur de 25 m et un diamètre de 4 m à titre d'exemple. Le four à pierre 11 comprend une chambre 12 d'axe vertical, une ouverture inférieure 13 et une ouverture supérieure 14 ou gueulard. L'ouverture inférieure 13 permet le retrait de la pierre cuite et l'introduction d'air en quantité permettant d'éviter une sortie de fumées par ladite ouverture inférieure 13.

L'ouverture supérieure 14 permet l'introduction de la pierre à cuire, par exemple par une trappe 15 et la sortie des fumées. L'ouverture supérieure 14 peut être munie d'un séparateur pour, d'une part, traiter les fumées, notamment les dépoussiérer dans un filtre 16, et, d'autre part, alimenter le four à pierre 11 en pierre à cuire. En aval du filtre 16, est prévue une cheminée 17 apte à évacuer les fumées dépoussiérées et refroidies. En aval du filtre 16, les fumées sont propres à être relâchées dans l'atmosphère alors que le filtre reçoit directement les fumées provenant du four à pierre 11 ou d'un récupérateur d'énergie.

La chambre 12 est de structure générale étanche. La chambre 12 comprend une zone de préchauffage 20 voisine de l'ouverture supérieure 14, une zone de cuisson 21 située sous la zone de préchauffage 20 et une zone de refroidissement 22 située sous la zone de cuisson 21 et voisine de l'ouverture inférieure 13. Entre la zone de cuisson 21 et la zone de refroidissement 22, la chambre est pourvue d'une ouverture 23 en communication de fluide avec une des sorties du carneau 10. La zone de refroidissement 22 présente une hauteur de 55 à 75% de la hauteur de la chambre 12. La zone de cuisson 21 présente une hauteur de 5 à 20% de la hauteur de la chambre 12. La zone de préchauffage 20 présente une hauteur de 10 à 25% de la hauteur de la chambre 12.

L'installation comprend également un échangeur thermique 25 en communication de fluide avec l'autre desdites sorties du carneau 10. L'échangeur thermique 25 transfère l'énergie thermique des fumées vers l'air alimentant le four verrier 1. Le transfert peut être par des plaques thermo-conductrices dans le cas d'un récupérateur. Le transfert peut être par un thermo-stockage intermédiaire dans des matériaux à forte capacité calorifique dans le cas d'un régénérateur. Des flux de fumées et d'air comburant s'alternent, l'un chauffant, l'autre refroidissant le régénérateur, au moyen de volets mobiles.

L'échangeur thermique 25 est pourvu d'une entrée d'air ambiant 26 et d'une sortie d'air chaud 27. La sortie d'air chaud 27 est reliée par une conduite 28 à l'entrée de comburant 7. L'échangeur thermique 25 est pourvu d'une entrée de fumées chaudes 29 alimentée par l'autre desdites sorties du carneau 10 et d'une sortie de fumées refroidies 30 débouchant vers le filtre 16.

Dans le mode de réalisation illustré sur la figure 2, le four verrier est un four oxygaz, c'est-à-dire à gaz carburant, en général du méthane, et à oxygène comburant. Les débits de gaz en entrée et en sortie sont alors réduits, notamment de 80% en entrée du comburant en raison de l'absence d'azote contenu dans l'air. De ce fait, la teneur en NOₓ peut être divisée par 3. Les fumées sont composées essentiellement de vapeur d'eau provenant de la combustion du gaz et de gaz carbonique provenant de la combustion du gaz et du dégazage du verre, ainsi que d'autres gaz de dégazage. Le débit de fumées étant plus faible que dans le mode de réalisation précédent, on peut coupler au moins deux fours verriers 1 et un four à pierre 11.

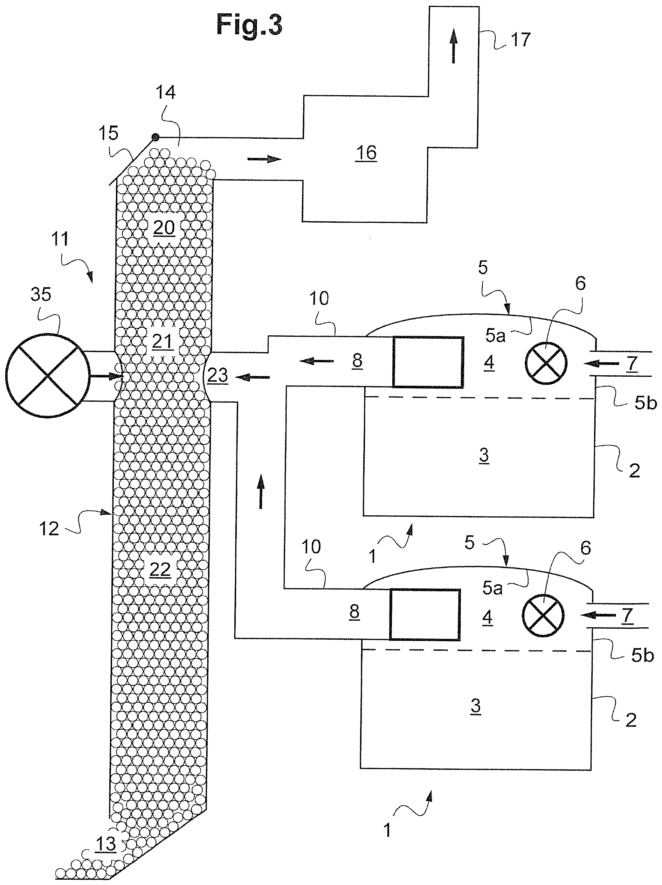

Dans le mode de réalisation illustré sur la figure 3, un brûleur d'appoint 35 est prévu dans le four à pierre 11 en consommant l'air montant dans la zone de refroidissement 22 ou à côté du four à pierre 11 fournissant un débit supplémentaire de fumées à haute température.

Dans les modes de réalisation ci-dessus, les fumées ressortent du four à pierre à basse température, en ayant perdu une part importante des chlorures et sulfates que lesdites fumées contenaient en sortie du four verrier. Il y a donc neutralisation et nettoyage des fumées au point que la neutralisation des fumées en aval devient inutile. La neutralisation produit des composés CaCl₂ et CaSO₄ en cas de chaux, MgCl₂ et MgSO₄ en cas de dolomie, restant dans la pierre cuite. Ces composés assurent un apport de chlorures et sulfates dans le bain de verre.

L'invention présente un intérêt accru lorsque le four verrier produit une nuance de verre nécessitant une température élevée, notamment borosilicate, par exemple Pyrex®, ou vitrocéramique.

En d'autres termes, la pierre à cuire comprend au moins un parmi : calcaire, dolomie, silex ou alumine hydratée. La pierre à cuire est introduite dans le four à pierre par le haut et entame une descente la menant après cuisson à sortir par le bas du four à pierre en y ayant parcouru la chambre. La chambre comprend une zone de préchauffage, une zone de cuisson et une zone de refroidissement dans cet ordre dans le sens de descente de la pierre.

Les gaz parcourant la chambre sont montants. Lesdits gaz peuvent comprendre de l'air ambiant entrant par le bas et ressortant soit en haut du four à pierre, soit en haut de la zone de refroidissement. Lesdits gaz comprennent des fumées de combustion. Les fumées de combustion entrent dans le bas de la zone de cuisson de pierre à cuire. Les fumées de combustion parcourent la zone de cuisson et la zone de préchauffage. Les fumées de combustion proviennent d'un conduit d'évacuation des fumées monté en aval d'une chambre de chauffe à combustion d'un four verrier industriel. Le four verrier industriel comprend une cuve à verre fondu et ledit conduit d'évacuation des fumées en sortie de la chambre de chauffe lors de la chauffe du four verrier. Les fumées de combustion sont à une température comprise entre 1300 et 1500°C en sortie de la chambre de chauffe. Les fumées en sortie du four à pierre sont à une température comprise entre 100 et 200°C, préférablement entre 100 et 150°C.

L'invention ne se limite pas aux exemples de procédés et de récipients décrits ci-avant, seulement à titre d'exemple, mais elle englobe toutes les variantes que pourra envisager l'homme de l'art dans le cadre des revendications ci-après.

## Revendications

1. Installation comprenant un four verrier (1) industriel comprenant une cuve (2) à verre fondu (3), une chambre de chauffe (4) à combustion située au-dessus de la cuve (2), et un conduit d'évacuation des fumées en communication avec la chambre de chauffe (4), et un four à pierre (11) comprenant une zone de cuisson (21) de pierre à cuire, le conduit d'évacuation des fumées comprend une sortie de fumées reliée à la zone de cuisson (21) de pierre à cuire alimentant la zone de cuisson (21) de pierre à cuire en fumées à haute température.

2. Installation selon la revendication 1, dans laquelle la sortie de fumées est ménagée dans un carneau (10) du conduit d'évacuation des fumées.

3. Installation selon la revendication 1 ou 2, dans laquelle le combustible est du gaz et/ou fioul, le comburant est de l'oxygène et/ou de l'air et la capacité du four verrier est supérieure à 10 tonnes de verre par jour.

4. Installation selon l'une des revendications précédentes, dans laquelle la zone de cuisson (21) est tubulaire, une zone d'alimentation en pierre à cuire étant disposée au-dessus et une zone de retrait de pierre cuite étant disposée en dessous.

5. Procédé de cuisson de pierre à cuire, notamment calcaire, dolomie, silex ou alumine hydratée, dans lequel de la pierre à cuire est introduite dans une zone de cuisson de pierre à cuire et la zone de cuisson est alimentée en fumées issues de la combustion provenant d'un conduit d'évacuation des fumées monté en aval d'une chambre de chauffe à combustion d'un four verrier industriel comprenant une cuve à verre fondu et ledit conduit d'évacuation des fumées en communication avec la chambre de chauffe lors de la chauffe du four verrier.

6. Procédé selon la revendication 5, dans lequel la température maximale au sein de la zone de cuisson de pierre à cuire est supérieure à 900°C, préférablement supérieure à 1000°C et/ou la cuisson de la pierre à cuire abaisse la température des fumées jusqu'à moins de 300°C, préférablement moins de 200°C.

7. Procédé selon la revendication 5 ou 6, dans lequel la température des fumées est abaissée de plus de 900°C, préférablement de plus de 1100°C correspondant à la récupération de la chaleur fatale.

8. Procédé selon l'une des revendications 5 à 7, dans lequel la pierre à cuire séjourne dans la zone de cuisson de pierre à cuire pendant une durée comprise entre 1 et 24 h et la pierre à cuire est déplacée à contre-courant des gaz de combustion.

9. Procédé selon l'une des revendications 5 à 8, dans lequel les fumées comprennent des composants chlorés et/ou soufrés, et lesdits composants chlorés et/ou soufrés sont piégés sur la pierre à cuire dans le cas d'utilisation de dolomie et/ou de calcaire.

## Patentansprüche

1. Installation, einen industriellen Glasofen (1) umfassend, der eine Wanne (2) für geschmolzenes Glas (3), eine Verbrennungsheizkammer (4), die sich oberhalb der Wanne (2) befindet, und eine Rauchausbringungsleitung in Verbindung mit der Heizkammer (4), und einen Steinofen (11) umfassend, der eine Brennzone (21) für zu brennenden Stein umfasst, wobei die Rauchausbringungsleitung einen Rauchausgang umfasst, der an die Brennzone (21) für zu brennenden Stein angeschlossen ist, der die Brennzone (21) für zu brennenden Stein mit Rauch mit hoher Temperatur versorgt.

2. Installation nach Anspruch 1, wobei der Rauchausgang in einem Kanal (10) der Rauchausbringungsleitung vorgesehen ist.

3. Installation nach Anspruch 1 oder 2, wobei der Brennstoff Gas und/oder Heizöl ist, der Brandförderer Sauerstoff und/oder Luft ist und die Kapazität des Glasofens größer als 10 Tonnen Glas pro Tag ist.

4. Installation nach einem der vorstehenden Ansprüche, wobei die Brennzone (21) rohrförmig ist, eine Versorgungszone für zu brennenden Stein oberhalb angeordnet ist, und eine Entnahmezone für gebrannten Stein unterhalb angeordnet ist.

5. Verfahren zum Brennen von zu brennendem Stein, insbesondere Kalk, Dolomit, Feuerstein oder Aluminiumoxidhydrat, wobei zu brennender Stein in eine Brennzone für zu brennenden Stein eingebracht wird, und die Brennzone mit aus der Verbrennung stammendem Rauch versorgt wird, der aus einer Rauchausbringungsleitung kommt, die stromabwärts einer Verbrennungsheizkammer eines industriellen Glasofens montiert ist, der eine Wanne für geschmolzenes Glas und die Rauchausbringungsleitung in Verbindung mit der Heizkammer beim Heizen des Glasofens umfasst.

6. Verfahren nach Anspruch 5, wobei die maximale Temperatur innerhalb der Brennzone für zu brennenden Stein höher als 900 °C, vorzugsweise höher als 1000 °C ist, und/oder das Brennen des zu brennenden Steines die Temperatur des Rauches bis auf weniger als 300 °C, vorzugsweise weniger als 200 °C absenkt.

7. Verfahren nach Anspruch 5 oder 6, wobei die Temperatur des Rauchs entsprechend der Rückgewinnung der Abwärme um mehr als 900 °C, vorzugsweise mehr als 1100 °C abgesenkt wird.

8. Verfahren nach einem der Ansprüche 5 bis 7, wobei sich der zu brennende Stein für eine Dauer in der Brennzone für zu brennenden Stein aufhält, die zwischen 1 und 24 Std. enthalten ist, und der zu brennende Stein gegen den Strom der Verbrennungsgase verschoben wird.

9. Verfahren nach einem der Ansprüche 5 bis 8, wobei der Rauch chlorierte und/oder schwefelige Komponenten umfasst, und die chlorierten und/oder schwefeligen Komponenten im Falle einer Verwendung von Dolomit und/oder Kalk auf dem zu brennenden Stein eingeschlossen sind.

## Claims

1. An installation including an industrial glass furnace (1) including a tank (2) for molten glass (3), a combustion heating chamber (4) situated above the tank (2), and a duct for evacuation of flue gases in communication with said heating chamber (4), and a stone furnace (11) including a firing zone (21) for stone to be fired, the flue gas evacuation duct including a flue gas outlet that is connected to the firing zone (21) of stone to be fired and supplying the firing zone (21) of stone to be fired with flue gases at high temperature.

2. The installation as claimed in claim 1, in which the flue gases outlet is in a duct (10) of the flue gases evacuation duct.

3. The installation as claimed in claim 1 or 2, in which the fuel is gas and/or fuel oil, the oxidizer is oxygen and/or air and the daily capacity of the glass furnace is greater than 10 tonnes of glass per day.

4. The installation as claimed in any one of the preceding claims, in which the firing zone (21) is tubular, a stone to be fired feeding zone being disposed above and a fired stone extraction zone being disposed below.

5. A method of firing stone to be fired, in particular limestone, dolomite, flint or hydrated alumina, in which the stone to be fired is introduced into a firing zone of stone to be fired and the firing zone is fed with combustion flue gases from a flue gases evacuation duct downstream of a heating chamber of an industrial glass furnace including a molten glass tank and said flue gases evacuation duct in communication with the heating chamber during heating of the glass furnace.

6. The method as claimed in claim 5, in which the maximum temperature in the firing zone of stone to be fired is greater than 900°C, preferably greater than 1000°C and/or the firing of the stone to be fired lowers the temperature of the flue gases to less than 300°C, preferably less than 200°C.

7. The method as claimed in claim 5 or 6, in which the temperature of the flue gases is lowered more than 900°C, preferably more than 1100°C corresponding to the recovery of the fatal heat.

8. The method as claimed in any one of claims 5 to 7, in which the stone to be fired remains in the firing zone of stone to be fired for between 1 and 24 h inclusive and the stone to be fired is moved in contraflow with the combustion gases.

9. The method as claimed in any one of claims 5 to 8, in which the flue gases include chlorinated and/or sulfated components and said chlorinated and/or sulfated components are trapped on the stone to be fired in the case of using dolomite and/or limestone.
